# EUROPÄISCHE PATENTSCHRIFT

(11) **EP 2 319 635 B1**
(45) Veröffentlichungstag und Bekanntmachung des Hinweises auf die Patenterteilung: **17.09.2014**
(21) Anmeldenummer: 09014029.4
(22) Anmeldetag: 10.11.2009
(51) Int. Cl.: B30B 1/18, F16H 25/22, F16H 25/20

(54) **Pressenantrieb und Verfahren zum Erzeugen einer Hubbewegung einer Werkzeuglagerung mittels eines Pressenantriebs**
Pressing drive and method for generating a stroke movement in a tool mount using a pressing drive
Entraînement de presse et procédé de production d'un mouvement de levée d'un support d'outils à l'aide d'un entraînement de presses

(43) Veröffentlichungstag der Anmeldung: 11.05.2011
(73) Patentinhaber: TRUMPF Werkzeugmaschinen GmbH & Co. KG, 71254 Ditzingen (DE)
(72) Erfinder: Schmidt, Christoph, 71735 Eberdingen/Hochdorf (DE)
(74) Vertreter: Kohler Schmid Möbus

(56) Entgegenhaltungen:
- EP-A1- 1 600 223
- DE-A1- 2 458 796
- GB-A- 901 256
- US-A- 5 193 408
- US-A- 5 214 972
- US-A- 5 269 213

## Beschreibung

Die Erfindung betrifft einen Pressenantrieb, mittels dessen eine Werkzeuglagerung mit einer Hubbewegung bewegbar ist, wobei der Pressenantrieb wenigstens einen Pressenantriebsmotor umfasst, der über eine mit einem motorseitigen und einem werkzeuglagerungsseitigen Kupplungselement versehene Kupplung mit der Werkzeuglagerung antriebsverbunden ist und wobei zwischen dem motorseitigen Kupplungselement und dem werkzeuglagerungsseitigen Kupplungselement ein als Federelement ausgebildetes elastisches Verbindungselement, um kinetische Energie zu speichern, zwischengeschaltet ist.

Des Weiteren betrifft die Erfindung ein Verfahren zum Erzeugen einer Hubbewegung einer Werkzeuglagerung mittels eines Pressenantriebs, welcher wenigstens einen Pressenantriebsmotor aufweist, der über eine mit einem motorseitigen und einem werkzeuglagerungsseitigen Kupplungselement versehene Kupplung mit der Werkzeuglagerung antriebsverbunden ist, wobei beim Erzeugen einer Hubbewegung durch den Pressenantriebsmotor eine Bewegungsänderung des werkzeuglagerungsseitigen Kupplungselementes unter Verformung eines zwischen dem werkzeuglagerungsseitigen und dem motorseitigen Kupplungselement zwischengeschalteten und als Federelement ausgebildeten elastischen Verbindungselementes eingeleitet wird.

Im Werkzeugmaschinenbau sind Pressenantriebe mit Kupplungen unterschiedlichster Bauarten bekannt. Generell dient dort eine Kupplung zur Übertragung einer von einem Pressenantriebsmotor erzeugten Antriebskraft auf ein an einer Werkzeuglagerung gehaltenes Werkzeug. Beispielsweise kann im Falle eines Pressenantriebs mit einem als hydraulische Kolben/Zylindereinheit ausgebildeten Pressenantriebsmotor durch eine einfache, starre Kupplung eine an einem Kolben der Kolben/Zylindereinheit anliegende Vorschubkraft auf ein Werkzeug übertragen werden.

Ein gattungsgemäßer Pressenantrieb sowie ein gattungsgemäßes Verfahren sind bekannt aus GB 901,256 A. Im Falle des Standes der Technik treibt ein als Elektromotor ausgeführter Pressenantriebsmotor über einen Antriebsriemen eine Hohlwelle mit einer Drehbewegung um die Hohlwellenachse an. Im Innern der Hohlwelle ist koaxial mit dieser ein elastischer Torsionsstab angeordnet. An einem seiner Längsenden ist der Torsionsstab formschlüssig mit der Hohlwelle verbunden. Mit seinem gegenüberliegenden Längsende ist der Torsionsstab gleichfalls formschlüssig an einem Antriebselement gelagert. Mittels des Torsionsstabes wird die von dem elektrischen Pressenantriebsmotor erzeugte Drehbewegung der Hohlwelle unmittelbar in eine Drehbewegung des Antriebselementes umgesetzt. Die Elastizität des Torsionsstabes bewirkt ein sanftes Anlaufen des Antriebselementes. In dem Antriebsstrang des vorbekannten Pressenantriebes ist dem Antriebselement ein sogenannter "Impulsmechanismus" nachgeschaltet, der aus der kontinuierlichen Antriebs-Drehbewegung des Antriebselementes eine intermittierende Hubbewegung eines Pressenwerkzeuges erzeugt.

Ein weiterer Pressenantrieb wird durch die WO 2005/016573 A1 beschrieben. Auch in diesem Fall dient ein Elektromotor als Pressenantriebsmotor. Ein Rotor des Elektromotors ist starr und fest mit einer Antriebsspindel verbunden, welche wiederum über eine Antriebsmutter mit einer Werkzeuglagerung antriebsverbunden ist. Der mechanische Pressenantrieb weist folglich eine starre Kupplung auf, welche motorseitig durch den Rotor des Pressenantriebsmotors und werkzeuglagerungsseitig durch die Antriebsspindel gebildet ist.

Bei vielen Pressenbauarten, z. B. bei Stanz-Umformpressen, soll die durch einen Pressenantrieb bereitgestellte Antriebskraft möglichst groß sein. Je größer jedoch die Antriebskraft ist, desto stabiler und folglich auch schwerer muss insbesondere der Antriebsstrang des Pressenantriebs ausgebildet sein. Die damit verbundene höhere Trägheit der bewegten Elemente des Antriebsstrangs wirkt sich jedoch ungünstig auf die Dynamik des Pressenantriebs aus, da bei Beschleunigungs- und Bremsvorgängen des Pressenantriebs immer ein erheblicher Teil der Antriebsleistung allein für die Bewegungsänderung der bewegten Elemente des Pressenantriebs verlorengeht.

Die Problematik verschärft sich noch bei Pressenantriebsmotoren in Form von Elektromotoren. Um die Antriebsleistung eines Elektromotors zu steigern, müssen insbesondere dessen Rotor-Magneten vergrößert werden. Häufig ist der Bauraum in Richtung der Motorachse aber begrenzt, sodass eine Vergrößerung der Rotor-Magneten nur in radialer Richtung möglich ist. Mit einer radialen Vergrößerung, d. h der Vergrößerung des Durchmessers der Rotor-Magneten, nimmt aber die Trägheit der Rotor-Magneten in besonderem Maße zu. Aufgrund der hohen Trägheitszunahme wird ein Leistungsgewinn des Elektromotors während Beschleunigungs- und Abbremsphasen des Elektromotors zumindest teilweise wieder aufgehoben.

Die Erfindung hat sich zum Ziel gesetzt, den gattungsgemäßen Pressenantrieb und das gattungsgemäße Verfahren zum Erzeugen einer Hubbewegung einer Werkzeuglagerung mittels eines Pressenantriebs derart weiterzuentwickeln, dass sich ein Pressenantrieb und ein Verfahren ergeben, welche sich durch eine besonders hohe Dynamik auszeichnen.

Erfindungsgemäß gelöst wird die Aufgabe durch einen Pressenantrieb mit den Merkmalen von Anspruch 1 und ein Verfahren zum Erzeugen einer Hubbewegung einer Werkzeuglagerung mit den Merkmalen von Anspruch 15.

Erfindungsgemäß ist der Pressenantrieb somit derart steuerbar, dass sich eine durch den Pressenantriebsmotor eingeleitete Bewegungsänderung erst an dem werkzeuglagerungsseitigen Kupplungselement auswirkt, wenn die bewegten Teile des Pressenantriebsmotors und die bewegten Teile des Antriebsstranges bis einschließlich zum werkzeuglagerungsseitigen Kupplungselement wenigstens teilweise schon eine entsprechende Bewegungsänderung ausgeführt haben. Sie sind folglich bereits in einem erheblichen Maße beschleunigt oder abgebremst worden. Die durch den Pressenantriebsmotor erzeugbare Antriebskraft bzw. das Antriebsdrehmoment stehen zu einem größeren Anteil zur Beschleunigung bzw. zum Abbremsen des übrigen Antriebstranges, der Werkzeuglagerung und letztlich des Werkzeuges zur Verfügung. Daher kann das Werkzeug aufgrund der gesteuerten Verzögerung mit einer höheren Beschleunigung angetrieben oder schneller abgebremst werden.

Darüber hinaus zeichnet sich die erfindungsgemäße Lösung dadurch aus, dass die Kupplung aufgrund des zwischengeschalteten Federelementes als nicht-schaltbare Kupplung ausgebildet sein kann. Störungsanfällige Schaltmechanismen können auf diese Weise vermieden werden. Es ergibt sich ein robuster und kostengünstiger Pressenantrieb. Aufgrund der Verwendung eines Federelementes als elastisches Verbindungselement besitzt der erfindungsgemäße Pressenantrieb eine hohe Energieeffizienz, da das Federelement eine bei der Verzögerung der Bewegungsänderung aufgenommene Energie später wieder abgeben kann.

Vorteilhafte Ausführungsarten der Erfindung nach Anspruch 1 ergeben sich aus den Ansprüchen 2 bis 14.

Bei einer Erfindungsbauart nach Anspruch 2 ist die Verzögerungseinrichtung von einer Bremseinrichtung und/oder einer Treibeinrichtung gebildet. Wirkt die Verzögerungseinrichtung als Bremseinrichtung, hindert sie das werkzeuglagerungsseitige Kupplungselement wenigstens teilweise an einer durch den Pressenantriebsmotor eingeleiteten Beschleunigung. Eine als Bremseinrichtung dienende Verzögerungseinrichtung kann z.B. als eine einfache Klemmeinrichtung oder eine Backenbremse usw. ausgebildet sein.

Im Falle einer als Treibeinrichtung ausgebildeten Verzögerungseinrichtung bewirkt die Verzögerungseinrichtung, dass das werkzeuglagerungsseitige Kupplungselement nicht oder zumindest in einem geringeren Ausmaß durch den Pressenantriebsmotor abgebremst wird.

In beiden Fällen greift die Verzögerungseinrichtung an dem werkzeuglagerungsseitigen Kupplungselement mit einer Verzögerungskraft bzw. einem Verzögerungsdrehmoment an, welches einer durch den Pressenantriebsmotor in das werkzeuglagerungsseitige Kupplungselement eingeleiteten Antriebskraft bzw. einem Antriebsdrehmoment entgegen gerichtet ist.

Außerdem zeichnet sich die Erzeugung der Verzögerungskraft bzw. des Verzögerungsdrehmomentes mittels eines Verzögerungsmotors dadurch aus, dass ein Verzögerungsmotor in einfacher Weise derart ausgebildet sein kann, dass der Betrag und die Richtung der Verzögerungskraft bzw. des Verzögerungsdrehmomentes stufenlos einstellbar sind. Auf diese Weise kann der Einfluss der Verzögerungseinrichtung flexibel an die sich ergebenden Verhältnisse angepasst werden.

Ist der Verzögerungsmotor als Elektromotor ausgebildet, kann vorteilhafterweise auf hydraulische Antriebe verzichtet werden. Darüber hinaus ergibt sich eine besonders kompakte und leistungsstarke Bauart des Pressenantriebes bei Verwendung eines Torquemotors als Verzögerungsmotor. Des Weiteren ergibt sich ein besonders leistungsfähiger Pressenantrieb, wenn der Verzögerungsmotor auch einen Beitrag zur Antriebskraft- bzw. zum Antriebsdrehmoment leisten kann (Anspruch 4). Es können sowohl der Pressenantriebsmotor als auch der Motor der Verzögerungseinrichtung als Antriebsmotoren zur Erzeugung einer Hubbewegung der Werkzeuglagerung dienen.

Gemäß Anspruch 5 ist der Pressenantriebsmotor als Elektromotor ausgebildet. Es ergibt sich ein mechanischer Pressenantrieb. Ein besonders leistungsstarker und kompakter Pressenantrieb ergibt sich, wenn der Elektromotor insbesondere als Torquemotor ausgebildet ist.

Im Falle der Erfindungsbauart nach Anspruch 6 ist das motorseitige Kupplungselement getriebelos mit dem Pressenantriebsmotor verbunden und/oder das werkzeuglagerungsseitige Kupplungselement getriebelos mit der Verzögerungseinrichtung verbunden. Es ergeben sich besonders kompakte und robuste Ausführungsarten der Erfindung.

Durch den vorstehend genannten Vorteil zeichnet sich auch die Bauart eines erfindungsgemäßen Pressenantriebs nach Anspruch 7 aus, bei welcher das werkzeuglagerungsseitige Kupplungselement von einer Antriebsmutter gebildet ist, welche auf einer mit der Werkzeuglagerung bewegungsverbundenen Antriebshubspindel aufsitzt. Vorteilhafterweise erfüllt das werkzeuglagerungsseitige Kupplungselement zugleich zwei Funktionen. Einerseits dient es als Kupplungselement und andererseits dient es als Teil eines Spindeltriebes zur Umlenkung einer Antriebsdrehbewegung in eine Antriebshubbewegung.

Der Bauraum eines erfindungsgemäßen Pressenantriebs reduziert sich um ein Weiteres bzw. das elastische Verbindungselement kann bei gleichem Bauraum größer ausgebildet sein, indem das als Federelement ausgebildete elastische Verbindungselement wenigstens teilweise in einer axialen Aufnahme der Antriebshubspindel angeordnet ist (Anspruch 8).

Im Falle einer Erfindungsbauart nach Anspruch 9 ergibt sich besonders bei einer intermittierenden Werkstückbearbeitung, d. h. bei einer Werkstückbearbeitung, bei welcher das Werkzeug zumindest kurzzeitig steht, ein vorteilhafter Pressenantrieb, indem das werkzeuglagerungsseitige Kupplungselement mittels der Verzögerungseinrichtung entgegen einer durch den Pressenantriebsmotor eingeleiteten Bewegungsänderung unbewegt in seiner Lage gehalten werden kann.

Beispielsweise im Falle einer Stanzbearbeitung wird eine Blechtafel nacheinander mit mehreren Stanzhüben bearbeitet. Zwischen den Stanzhüben wird die Blechtafel gegenüber dem Stanzwerkzeug neu positioniert, wobei das Stanzwerkzeug zumindest zeitweise während der Positionierung der Blechtafel in einer von der Blechtafel beabstandeten Hublage (obere Hubendlage) angeordnet ist, um die Gefahr von Beschädigungen der Blechtafel durch das Werkzeug beim Positionieren zu reduzieren.

Erfindungsgemäß kann der Zeitraum, während dem das Stanzwerkzeug in der oberen Hubendlage verbleiben muss, dazu genutzt werden, den Pressenantriebsmotor bereits zu beschleunigen, wobei die Verzögerungseinrichtung derart steuerbar ist, dass sie eine Verzögerungskraft bzw. eine Verzögerungsdrehmoment aufbringt, welche während der Verzögerungsphase dem Betrag nach der von dem Pressenantriebsmotor eingeleiteten Antriebskraft bzw. dem Antriebsdrehmoment entspricht.

Bei einem Pressenantrieb nach Anspruch 10 ist die Werkzeuglagerung mittels des Pressenantriebs in einer Hinhubrichtung und in einer entgegengesetzten Rückhubrichtung bewegbar. Die sich für die Bewegung der Werkzeuglagerung in Hinhubrichtung ergebenden Vorteile können auf diese Weise auch bei einer Rückhubbewegung der Werkzeuglagerung zumindest teilweise genutzt werden.

Nach Anspruch 11 ergibt sich eine hinsichtlich des Platzbedarfs vorteilhafte Bauart der Erfindung. Denn bei der Verwendung einer Torsionsfeder wird nicht, wie bei der Verwendung z. B. einer Axialfeder, zusätzlicher Bauraum für eine Einfederung des Federelementes benötigt.

Durch eine besonders hohe Dynamik zeichnet sich ein Pressenantrieb gemäß Anspruch 12 aus, indem die Federsteifigkeit eines als elastisches Verbindungselement dienenden Federelementes und die Dynamik des Pressenantriebsmotors, d. h. die sich unter den Umständen ergebende maximal mögliche Beschleunigung bzw. das maximal mögliche Abbremsvermögen des Pressenantriebsmotors, aufeinander abgestimmt sind.

Die Federsteifigkeit des Federelementes, z. B. die Federkonstante einer einfachen Axialfeder, ist ein Maß für die Spannkraft, mit welcher die Feder gespannt ist, wenn sie um einen bestimmten Federweg komprimiert wurde.

Beispielsweise bei stehendem werkzeuglagerungsseitigen Kupplungselement kann der Pressenantriebsmotor unter Verformung des Federelementes höchstens so lange beschleunigt werden, bis das motorseitige Kupplungselement um einen Federweg (Drehwinkel) bewegt wurde, bei welchem die Feder mit einer Spannkraft (Spanndrehmoment) gespannt ist, die der Maximalkraft (Maximaldrehmoment) entspricht, die der Pressenantriebsmotor höchstens über das motorseitige Kupplungselement in das Federelement einleiten kann.

Je weicher das Federelement ist, desto länger kann der Pressenantriebsmotor folglich beschleunigt bzw. abgebremst werden und gleichzeitig die eingeleitete Bewegungsänderung noch verzögert werden.

Um die Dynamik des Pressenantriebs mittels der Verzögerungseinrichtung möglichst wirkungsvoll zu steigern, sollte das Federelement während der Verzögerungsphase einerseits mit einer möglichst hohen Spannkraft bzw. einem möglichst hohen Spanndrehmoment gespannt werden. Denn diese Spannkraft bzw. dieses Spanndrehmoment stehen nach Abschluss der Verzögerungsphase zur Beschleunigung bzw. zum Abbremsen des werkzeuglagerungsseitigen Kupplungselementes sowie der diesem nachgelagerten, bewegten Teile zur Verfügung.

Andererseits sollte der Pressenantriebsmotor während der Verzögerungsphase auf eine möglichst hohe Geschwindigkeit beschleunigt bzw. auf möglichst niedrige Geschwindigkeit abgebremst werden können, gegebenenfalls sollte der Pressenantriebsmotor während der Verzögerungsphase sogar in Gegenrichtung beschleunigt werden können, d. h. die Beschleunigung (der Abbremsvorgang) des Pressenantriebsmotors und der Teile des Antriebsstranges bis einschließlich zum motorseitigen Kupplungselement sollte möglichst abgeschlossen sein. Auf diese Weise steht nach Abschluss der Verzögerungsphase ein größerer Anteil der Antriebsleistung des Pressenantriebsmotors für die Beschleunigung (das Abbremsen) des werkzeuglagerungsseitigen Kupplungselementes, einschließlich nachfolgender bewegter Teile, zur Verfügung.

Vor diesem Hintergrund müsste das Federelement generell sehr weich ausgestaltet sein, denn so kann sichergestellt werden, dass die Verzögerungsphase lange genug sein kann, damit der Pressenantriebsmotor möglichst vollständig beschleunigt (abgebremst) werden kann.

Zusätzlich können aber andere Faktoren die Zeitspanne verkürzen, in welcher der Pressenantriebsmotor unter Verzögerung der Bewegungsänderung beschleunigt bzw. abgebremst werden kann. Beispielsweise bildet im Falle der intermittierenden Werkstückbearbeitung und wenn der Pressenantriebsmotor bei stehendem Stanzwerkzeug beschleunigt werden soll, die Stillstandzeit des Werkzeuges eine obere Grenze für die zur Beschleunigung des Pressenantriebsmotors zur Verfügung stehende Zeit. Als weiterer Faktor ist beispielhaft die Dauer zu nennen, bis eine Hubbewegung umgekehrt wird, denn, je kürzer die genannte Hubdauer ist, desto weniger Zeit zum Verzögern eines eingeleiteten Abbremsen der Werkzeuglagerung steht zur Verfügung.

Folglich kann die Federsteifigkeit des Federelementes auch nicht beliebig niedrig gewählt werden, denn sonst kann das Federelement innerhalb der zur Verfügung stehenden kurzen Verzögerungszeit lediglich mit einer (zu) niedrigen Spannkraft bzw. einem (zu) niedrigen Spanndrehmoment gespannt werden.

Des Weiteren erschwert ein sehr weiches Federelement die Steuerbarkeit des Pressenantriebsmotors, insbesondere reduziert es die Positionsgenauigkeit des Pressenantriebs, da im Falle eines weichen Federelementes ein Überschwingen der Werkzeuglagerung schwer auszusteuern ist.

Um durch die Erfindung einen großen Effekt auf die Dynamik eines Pressenantriebs zu erhalten, sind vorzugsweise die Federsteifigkeit und die sich ergebende maximal mögliche Beschleunigung des Pressenantriebsmotors derart aufeinander abgestimmt, dass das Federelement während einer Verzögerungsphase um wenigstens 30%, insbesondere um wenigstens 50 %, vorzugsweise um wenigstens 90%, der durch den Pressenantriebsmotor in das Federelement einleitbaren Maximalkraft bzw. des Maximaldrehmomentes spannbar ist, wobei gleichzeitig der Pressenantriebsmotor um wenigstens 30 %, insbesondere um wenigstens 50%, vorzugsweise um wenigstens 90% seiner Maximalgeschwindigkeit beschleunigbar ist.

Im Falle einer Verzögerung eines Abbremsvorgangs gelten entsprechende Prozentangaben für die Zunahme der Spannkraft (Spanndrehmoment) und für die Geschwindigkeitsreduktion.

Wenn möglich, ist die Federsteifigkeit aber so gewählt, dass das Federelement am Ende einer Verzögerungsphase nahezu um eine durch den Pressenantriebsmotor in das Federelement einleitbare Maximalkraft bzw. Maximaldrehmoment spannbar ist, wobei zugleich der Pressenantriebsmotor nahezu um seine Maximalgeschwindigkeit beschleunigbar bzw. ausgehend von seiner Maximalgeschwindigkeit nahezu vollständig abbremsbar ist, gegebenenfalls sogar in Gegenrichtung beschleunigbar ist.

Ein flexibel an die sich jeweils ergebenden Verhältnisse anpassbarer Pressenantrieb ergibt sich gemäß Anspruch 13, indem die Federsteifigkeit eines als Verbindungselement dienenden Federelementes einstellbar ist. Insbesondere kann die Federsteifigkeit in Abhängigkeit der Länge der Hubbewegung eingestellt werden, wobei die Federsteifigkeit umso größer einzustellen ist, desto kürzer die Hubbewegung ist.

Die Anpassungsfähigkeit des Pressenantriebs erhöht sich um ein Weiteres, wenn die Federsteifigkeit bei einer durch den Pressenantrieb erzeugten Hubbewegung der Werkzeuglagerung einstellbar ist. Der optimale Wert der Federsteifigkeit kann aufgrund der unterschiedlichen Verhältnisse zu Beginn der Hubbewegung und insbesondere bei einer Hubumkehr unterschiedlich sein. Dank der Möglichkeit, die Federsteifigkeit bei der Hubbewegung einzustellen, kann der Wert der Federsteifigkeit für die verschiedenen Abschnitte der Hubbewegung optimal eingestellt werden.

Eine besonders elegante Lösung, um die Federsteifigkeit des zwischengeschalteten Federelementes für verschiedene Abschnitte der Hubbewegung unterschiedlich vorsehen zu können, ergibt sich nach Anspruch 14, indem das als elastisches Verbindungselement dienende Federelement zumindest teilweise als Torsionsfederelement ausgebildet ist, wobei sich die Federsteifigkeit des Torsionsfederelements in einer Torsionsrichtung und die Federsteifigkeit des Torsionsfederelements in der entgegengesetzten Torsionsrichtung unterscheiden.

Nachstehend wird die Erfindung anhand beispielhafter schematischer Darstellungen näher erläutert. Es zeigen:
- Figur 1: eine perspektivische Darstellung einer Werkzeugmaschine zum Schneiden und/oder Umformen von Blechtafeln,
- Figur 2: einen Pressenantrieb für die Werkzeugmaschine aus Figur 1 in einer Schnittdarstellung,
- Figur 3: einen Pressenantrieb zweiter Bauart für eine Werkzeugma- schine aus Figur 1 und
- Figur 4: der Pressenantrieb aus Figur 3 in einer Schnittdarstellung ent- lang einer anderen Schnittebene.

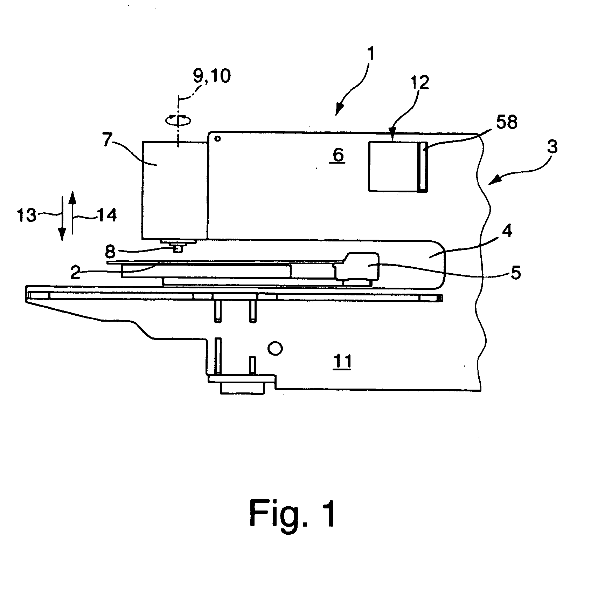

Figur 1 zeigt eine Werkzeugmaschine 1 zum Stanzen und/oder Umformen eines plattenartigen Werkstückes in Form einer Blechtafel 2. Die Werkzeugmaschine 1 weist ein C-förmiges Maschinengestell 3 auf, in dessen Rachen 4 eine herkömmliche Koordinatenführung 5 vorgesehen ist. Am Ende des oberen Schenkels 6 des Maschinengestells 3 ist ein Pressenantrieb 7 angeordnet. Mittels des Pressenantriebs 7 ist ein als Stanzwerkzeug 8 ausgebildetes Bearbeitungswerkzeug mit einer Hubbewegung relativ zu der an der Koordinatenführung 5 gelagerten Blechtafel 2 entlang einer Hubachse 9 heb- und senkbar. Außerdem ist das Bearbeitungswerkzeug 8 mittels des Pressenantriebs 7 um eine Dreheinstellachse 10, welche mit der Hubachse 9 zusammenfällt, dreheinstellbar. An dem unteren Schenkel 11 des Maschinengestells 3 und gegenüber dem Pressenantrieb 7 ist eine Werkzeuglagerung für ein zweites Werkzeug vorgesehen (nicht gezeigt).

Eine numerische Maschinensteuerung 12 dient zur Steuerung sämtlicher Antriebe der Werkzeugmaschine 1.

Zur Durchführung einer Stanz- bzw. einer Umformbearbeitung der Blechtafel 2 wird diese mittels der Koordinatenführung 5 in einer Ebene quer zur Hubachse 9 positioniert. Anschließend wird das obere Werkzeug 8 ausgehend von einer oberen Hubendlage in einer Hinhubrichtung 13 auf die Blechtafel 2 abgesenkt. Unter Zusammenwirken des oberen Werkzeuges 8 und des am unteren Schenkel 11 des Maschinengestells 3 angeordneten Werkzeuges erfolgt eine Bearbeitung der Blechtafel 2, z. B. wird an der Blechtafel 2 ein Stanzdurchbruch erstellt. Nach Abschluss der Absenkbewegung des oberen Werkzeuges 8 ist dieses in einer unteren Hubendlage angeordnet. Ausgehend von der unteren Hubendlage wird das Werkzeug 8 mit einer Hubbewegung in einer Rückhubrichtung 14 wieder in die obere Hubendlage zurückbewegt. Schließlich kann die Blechtafel 2 neu positioniert werden. Es erfolgt eine weitere Bearbeitung der Blechtafel 2 an einer anderen Stelle. Dieser Vorgang wird sooft wie erforderlich wiederholt.

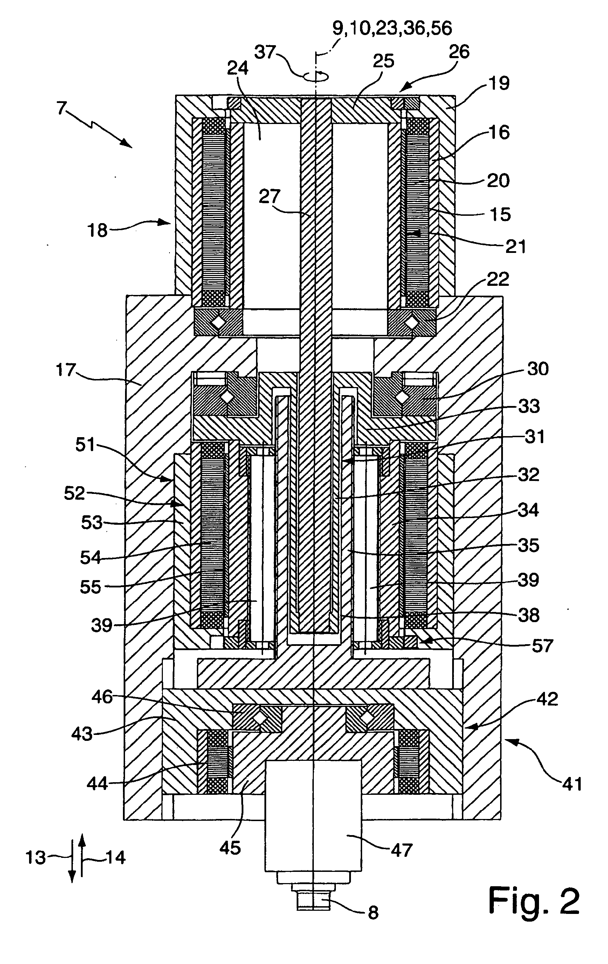

Figur 2 ist der Pressenantrieb 7 der Werkzeugmaschine 1 im Detail zu entnehmen. Der Pressenantrieb 7 weist ein maschinengestellfestes Pressenantriebsgehäuse 17 auf. Auf der von der Blechtafel 2 abgelegenen Seite des Pressenantriebsgehäuse 17 ist ein Pressenantriebsmotor 18 in Form eines Torquemotors angeordnet, welcher ein fest mit dem Pressenantriebsgehäuse 17 verbundenes Antriebsmotorgehäuse 19, einen Stator 20 (einschließlich eines Kühlrings 16) und einen mit Magneten 15 versehenen Rotor 21 umfasst, der an dem Pressenantriebsgehäuse 17 mittels eines Drehlagers 22 gelagert ist. Die Antriebsdrehachse 23 des Pressenantriebsmotors 18 fällt mit der Hubachse 9 zusammen.

Eine axiale Aufnahme 24 des Pressenantriebsmotors 18 ist an der von dem Pressenantriebsgehäuse 17 abgelegenen Seite durch einen scheibenförmigen Läufer 25 abgedeckt. Mittels einer Messeinrichtung 26 kann die Drehstellung des Läufers 25 um die Antriebsdrehachse 23 detektiert werden. Der Läufer 25 und der Rotor 21 des Pressenantriebsmotors 18 sind unbeweglich (getriebelos) miteinander verbunden.

Des Weiteren ist der Pressenantrieb 7 mit einem Federelement in Form einer stabförmigen Torsionsfeder 27 versehen, die konzentrisch zur Antriebsdrehachse 23 des Pressenantriebsmotors 18 angeordnet ist und die axiale Aufnahme 24 des Pressenantriebsmotors 18 durchragt.

An einem Ende ist die stabförmige Torsionsfeder 27 mit dem Läufer 25 und an dem anderen Ende mit einem an einem Drehlager 30 gelagerten, zweiten Torsionsfederelement 31 verbunden. Das zweite Federelement 31 weist einen die stabförmige Torsionsfeder 27 teilweise umgebenden, hülsenartigen Abschnitt 32 und einen tellerartigen Abschnitt 33 auf. An dem tellerartigen Abschnitt 33, welcher nur in sehr geringem Maße verformbar ist, ist das zweite Federelement 31 mit einer Antriebsmutter 34 verbunden.

Die Antriebsmutter 34 sitzt auf einer Antriebshubspindel 35, deren Spindelachse 36 mit der Antriebsdrehachse 23 des Pressenantriebsmotors 18 und der Hubachse 9 identisch ist. Die Antriebsmutter 34 und die Antriebshubspindel 35 bilden einen Rollengewindetrieb mit Planetenrollen 39, mittels dessen eine Drehbewegung der Antriebsmutter 34 in eine Hubbewegung der Antriebshubspindel 35 überführbar ist, z. B. eine Drehbewegung in Antriebsdrehrichtung 37 in eine Hubbewegung in Hinhubrichtung 13. Die Antriebshubspindel 35 weist eine axiale Aufnahme 38 auf, welche an dem pressenantriebsmotorseitigen Ende der Antriebshubspindel 35 offen ist. Durch diese axiale Öffnung ragen die stabförmigen Torsionsfeder 27 und der hülsenartige Abschnitt 32 des zweiten Federelementes 31 in die axiale Aufnahme 38 der Antriebshubspindel 35 und sind dort relativ zu der Antriebshubspindel 35 axial beweglich angeordnet.

An ihrem von dem Pressenantriebsmotor 18 abgewandten Ende ist die Antriebshubspindel 35 mit einem Dreheinstellblock 41 versehen. Der Dreheinstellblock 41 ist mittels eines Linearlagers 42 entlang der Hubachse 9 verschieblich, aber drehfest an dem Pressenantriebsgehäuse 17 gelagert. Das Linearlager 42 dient über den Dreheinstellblock 41 zusätzlich zur Lagerung und als Verdrehsicherung der Antriebshubspindel 35.

Der Dreheinstellblock 41 weist einen Grundkörper 43, einen Dreheinstellmotor 44 und einen Drehteller 45 auf. Der Drehteller 45 ist gegenüber dem Grundkörper 43 über ein Drehlager 46 abgestützt und mittels des Dreheinstellmotors 44 um die Dreheinstellachse 10 relativ zu dem Grundkörper 43 dreheinstellbar. Fest mit dem Drehteller 45 ist eine Werkzeuglagerung 47 verbunden, die das Bearbeitungswerkzeug in Form des Stanzwerkzeugs 8 lagert.

Des Weiteren ist eine an der Antriebsmutter 34 angreifende Verzögerungseinrichtung 51 vorgesehen. Die Verzögerungseinrichtung 51 weist einen Verzögerungsmotor 52 in Form eines Torquemotors auf, der ein mit dem Pressenantriebsgehäuse 17 fest verbundenes Verzögerungsmotorgehäuse 53, einen Stator 54 und einen Rotor 55 umfasst. Die Motorachse 56 des Verzögerungsmotors 52 fällt mit der Motorachse 23 des Pressenantriebsmotors 18, der Hubachse 9 usw. zusammen. Der Rotor 55 des Verzögerungsmotors 52 besteht im Wesentlichen aus Magneten, welche getriebelos mit der Antriebsmutter 34 verbunden sind. Eine Messeinrichtung 57 dient zur Ermittlung der Drehstellung des Rotors 55 um die Motorachse 56.

Der Pressenantriebsmotor 18, der Verzögerungsmotor 52 sowie der Dreheinstellmotor 44 sind mittels einer Pressenantriebssteuerung 58 steuerbar, die Teil der numerischen Steuereinheit 12 ist (Figur 1). Im Übrigen ist die Pressantriebssteuerung 58 u. a. auch mit den Messeinrichtungen 26 und 57 verbunden, so dass deren Messwerte zur Steuerung der Antriebe verwendet werden können.

Kurzgefasst und unter Nichtbeachtung der Verzögerungseinrichtung 51 stellt sich die Funktionsweise des Pressenantriebs 7 wie folgt dar. Eine Drehbewegung des Pressenantriebsmotors 18 bewirkt über den Läufer 25, die Torsionsfederelemente 27 und 31, die Antriebsmutter 34 sowie die Antriebshubspindel 35 eine Hubbewegung der Werkzeuglagerung 47. Der Läufer 25 des Pressenantriebsmotors 18 und die Antriebsmutter 34 bilden eine (nicht-schaltbare) Kupplung des Pressenantriebs 7. Der Läufer 25 dient als motorseitiges Kupplungselement und die Antriebsmutter 34 als werkzeuglagerungsseitiges Kupplungselement. Zwischen dem Läufer 25 und der Antriebsmutter 34 sind die stabförmige Torsionsfeder 27 und das zweite Torsionsfederelement 31 als mehrteiliges, elastisches Verbindungselement zwischengeschaltet.

Im Folgenden wird das Zusammenwirken der Bauteile des Pressenantriebs 7 einschließlich der Verzögerungseinrichtung 51 im Laufe einer Hubbewegung der Werkzeuglagerung 47 ausführlicher beschrieben.

Zu Beginn einer Werkstückbearbeitung wird das Bearbeitungswerkzeug 8 mittels des Dreheinstellmotors 44 um die Dreheinstellachse 10 in eine gewünschte Drehstellung überführt und wird die zu bearbeitende Stelle der Blechtafel 2 unter dem Bearbeitungswerkzeug 8 mittels der Koordinatenführung 5 positioniert.

Schon bevor die Positionierung der Blechtafel 2 abgeschlossen ist, leitet der Pressenantriebsmotor 18 eine Bewegungsänderung der (noch) unbewegten Antriebsmutter 34 ein. Hierzu beschleunigt der Pressenantriebsmotor 18 den Läufer 25 in Antriebsdrehrichtung 37. Gleichzeitig wird der Verzögerungsmotor 52 von der Pressenantriebssteuerung 58 derart gesteuert, dass die Antriebsmutter 34 von dem Verzögerungsmotor 52 mit einem Verzögerungsdrehmoment beaufschlagt wird, welches dem Betrag nach dem Antriebsdrehmoment entspricht, das von dem Pressenantriebsmotor 18 über die Torsionsfederelemente 27, 31 auf die Antriebsmutter 34 eingeleitet wird, diesem aber entgegengerichtet ist. Da sich das Antriebsdrehmoment und das Verzögerungsdrehmoment daher aufheben, bleibt die Antriebsmutter 34 unbewegt. Aufgrund der durch den Pressenantriebsmotor 18 bewirkten Drehbewegung des Läufers 25 werden die Torsionsfederelemente 27, 31, welche zwischen dem rotierenden Läufer 25 und der stehenden Antriebsmutter 34 zwischengeschaltet sind, zunehmend in einer Torsionsrichtung gespannt.

Bei den vorstehend beschriebenen Verhältnissen dient der Verzögerungsmotor 52 als Bremseinrichtung.

Wenn die Positionierung der Blechtafel 2 abgeschlossen ist oder kurz vorher (Hubvorauslösung) steuert die Pressenantriebssteuerung 58 den Pressenantrieb 7 derart, dass eine Hubbewegung der Werkzeuglagerung 47 in Hinhubrichtung 13 einsetzt. Hierzu wird die Bremswirkung des Verzögerungsmotors 52 aufgehoben, indem der Rotor 53 des Verzögerungsmotors 52 in Antriebsdrehrichtung 37 beschleunigt wird.

Zu diesem Zeitpunkt sind die Torsionsfederelemente 27, 31 mit einem Drehmoment gespannt, welches z. B. nahezu dem maximalen Drehmoment entspricht, das der (bewegte) Pressenantriebsmotor 18 in die Torsionsfederelemente 27, 31 einleiten kann und der Verzögerungsmotor 52 gegenhalten kann. Außerdem dreht sich der Pressenantriebsmotor 18 mit einer sehr hohen Drehgeschwindigkeit, d. h. die Beschleunigung des Rotors 21 und des Läufers 25 ist zumindest nahezu abgeschlossen. Dies ergibt sich durch eine entsprechende Wahl der Federsteifigkeit der Torsionselemente 27, 31.

Die Antriebsmutter 34 wird nun durch die Verzögerungseinrichtung 51 nicht mehr mit einem Verzögerungsdrehmoment beaufschlagt, so dass das über die gespannten Torsionsfederelemente 27, 31 anliegende Drehmoment vollständig zur Beschleunigung der Antriebsmutter 34 dienen kann. Da der Pressenantriebsmotor 18 bereits beschleunigt wurde, steht zu Beginn der Hubbewegung der Werkzeuglagerung 47, die Antriebsleistung des Pressenantriebsmotors 18 für eine Beschleunigung des übrigen Antriebsstranges, der Werkzeuglagerung 47 sowie des Werkzeuges 8 zur Verfügung. Außerdem steht die gespeicherte kinetische Energie und die gespeicherte Federenergie für die Beschleunigung zur Verfügung. Zusätzlich wird die Antriebsmutter 34 darüber hinaus mit einem durch den Verzögerungsmotor 52 erzeugten Drehmoment in Antriebsdrehrichtung 37 beaufschlagt. Der Verzögerungsmotor 52 dient demnach bei diesem Zustand als weiterer Antriebsmotor.

Zunächst werden die Torsionsfederelemente 27, 31 auch nach dem Starten der Hubbewegung der Werkzeuglagerung noch ein wenig weiter gespannt. Sobald der Verzögerungsmotor 52 auf eine Drehzahl beschleunigt wurde, die mit der Drehzahl des Pressenantriebsmotors 18 übereinstimmt, werden die Torsionsfederelemente 27, 31 aber nicht mehr weiter gespannt. Der Läufer 25 und die Antriebsmutter 34 befinden sich dann im Gleichlauf. Dieser Zustand wird aber in der Regel nicht erreicht, da zuvor die im Folgenden beschriebene Bewegungsumkehr eingeleitet wird.

Während der Hinhubbewegung des Bearbeitungswerkzeugs 8, leitet der Pressenantriebsmotor 18 ein Abbremsen und eine Rückhubbewegung der Werkzeuglagerung 47 ein. Zu diesem Zweck reduziert der Pressenantriebsmotor 18 seine Drehzahl, bis er letztlich seine Drehrichtung umkehrt und entgegen der Antriebsdrehrichtung 37 beschleunigt. Der Pressenantriebsmotor 18 vollzieht die Bewegungsumkehr mit maximaler Antriebsleistung.

Die so eingeleitete Bewegungsänderung der Antriebsmutter 34 wird aber mittels der Verzögerungseinrichtung 51 unter Steuerung der Pressenantriebssteuerung 58 verzögert, indem der Verzögerungsmotor 52 weiterhin die Antriebsmutter 34 in Antriebsdrehrichtung 37 antreibt, gegebenenfalls sogar in Antriebsdrehrichtung 37 beschleunigt .

Unter diesen Umständen werden die Torsionsfederelemente 27, 31 zunehmend entspannt, bis sie vollständig entspannt sind und wieder in entgegengesetzter Torsionsrichtung gespannt werden. Die Verzögerungseinrichtung 51 dient während dieser Zeitspanne als Treibeinrichtung.

Nach Abbremsen des Pressenantriebsmotors 18 und bevor das Bearbeitungswerkzeug 8 die untere Hubendlage erreicht hat, bremst auch der Verzögerungsmotor 52 ab und, wenn das Bearbeitungswerkzeug 8 die untere Hubendlage erreicht hat, beschleunigt er sofort entgegen der Antriebsdrehrichtung 37. Bei dem Abbremsvorgang und bei dem Beschleunigungsvorgang für die Rückhubbewegung ergibt sich auf vergleichbare Weise wie beim Starten der Hubbewegung eine hohe Dynamik des Pressenantriebs 7, da insbesondere der Rotor 21 des Pressenantriebsmotors und der Läufer 25 bereits abgebremst bzw. beschleunigt sind, wenn die Werkzeuglagerung 47 mitsamt dem Bearbeitungswerkzeug 8 abgebremst bzw. beschleunigt wird.

Während der folgenden Rückhubbewegung werden die Drehzahlen des Verzögerungsmotors 52 und des Pressenantriebsmotors 18 derart gesteuert, dass zunächst ein Abbremsen der Rückhubbewegung der Werkzeuglagerung 47 durch den Pressenantriebsmotor 18 eingeleitet wird, wobei das Abbremsen wiederum mittels des Verzögerungsmotor 52 unter Verformung der Federelemente 27, 31 verzögert wird. Nach Abschluss der Rückhubbewegung ist das Bearbeitungswerkzeug 8 wieder in der in Figur 2 gezeigten oberen Hubendlage angeordnet, wobei das Bearbeitungswerkzeug 8 aufgrund eines Überschwingens auch kurzzeitig über die obere Hubendlage hinaus bewegt werden kann. Anschließend oder kurz zuvor wird die Neupositionierung der Blechtafel 2 gestartet.

Die Blechtafel 2 wird bei der Hubbewegung durch das Bearbeitungswerkzeug 8 mit einer Beaufschlagungskraft (z. B. Stanz-/Umformkraft) beaufschlagt, welche von dem Pressenantrieb 7 bereitgestellt werden muss. Im Regelfall trifft das Bearbeitungswerkzeug 8 auf die Blechtafel 2 und beaufschlagt die Blechtafel 2 dann mit einer Beaufschlagungskraft, wenn der Pressenantriebsmotor 18 noch nicht abgebremst hat. Zu diesem Zeitpunkt sind die Torsionsfederelemente 27, 31 noch gespannt, so dass in der Regel der Pressenantriebsmotor 18 und der Verzögerungsmotor 52 gemeinsam die Beaufschlagungskraft aufbringen können. Zusätzlich wird ein Teil der Beaufschlagungskraft durch die Trägheit des bewegten Antriebsstranges aufgebracht.

Für den Fall, dass der Pressenantriebsmotor 18 beim Aufsetzen des Werkzeuges 8 auf die Blechtafel 2 bereits abgebremst hat und die Torsionsfederelemente 27, 31 bereits zumindest teilweise entspannt sind, muss der Verzögerungsmotor 52 weitgehend alleine die Beaufschlagungskraft aufbringen. Reicht die durch den Verzögerungsmotor 52 bereitstellbare Beaufschlagungskraft nicht aus, z. B. beim Umformen von dicken Blechtafeln, kann der Pressenantriebsmotor 18 zur zusätzlichen Einleitung einer Beaufschlagungskraft gesteuert zugeschaltet werden, indem er wieder beschleunigt oder erst gar nicht abgebremst wird. Dadurch werden bzw. bleiben die Torsionsfederelemente 27, 31 gespannt und der Pressenantriebsmotor 18 kann einen Beitrag zur Beaufschlagungskraft liefern. Diese Ansteuerung findet insbesondere bei langsamen (Umform-)Bearbeitungen Anwendung.

Des Weiteren kann mittels der Werkzeugmaschine 1 eine Werkstückbearbeitung erfolgen, bei welcher ein Werkzeug nicht in der oberen Hubendlage verbleibt, sondern sofort wieder abgesenkt wird. Beispielhaft ist eine Signierbearbeitung oder eine schnelle Sickenbearbeitung zu nennen. Bei einer derartigen, oszillierenden Bearbeitungsbewegung wird der Pressenantrieb 7 bei der Hinhubbewegung und der Rückhubbewegung identisch, die Motoren 18, 52 aber jeweils mit umgekehrten Drehrichtungen gesteuert.

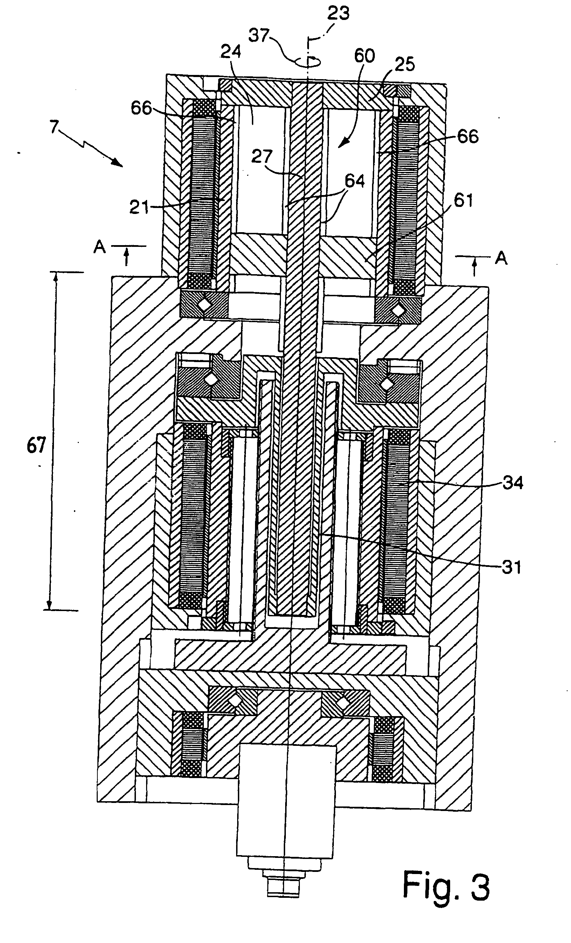

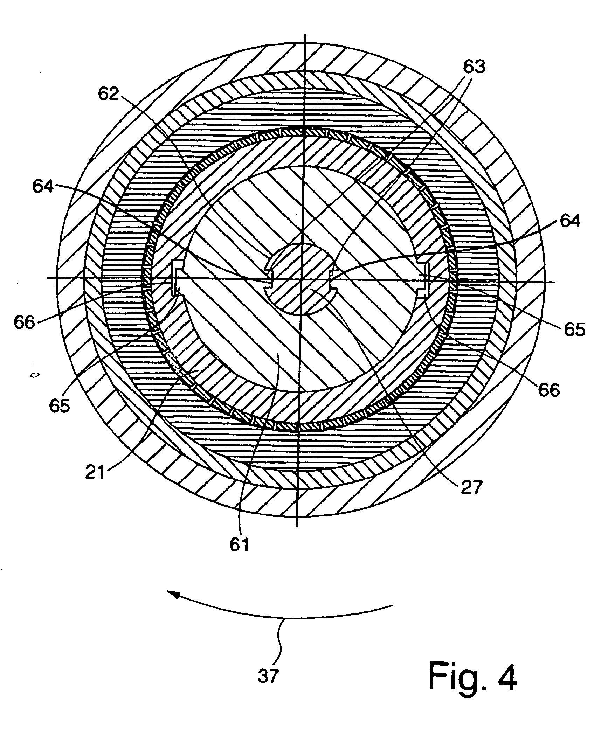

Eine andere Variante eines Pressenantriebs 7 für eine Werkzeugmaschine 1 ist in den Figuren 3 und 4 gezeigt, welche abweichend von dem Pressenantrieb 7 gemäß Figur 2 eine Einstelleinrichtung 60 für die (wirksame) Federsteifigkeit der stabförmigen Torsionsfeder 27 aufweist.

Die Einstelleinrichtung 60 umfasst eine Schaltscheibe 61, welche innerhalb der Aufnahme 24 des Pressenantriebsmotors 18 entlang der Torsionsfeder 27 in unterschiedlichen axialen Stellungen anordenbar ist. Bei einer bevorzugten Variante ist die Schaltscheibe 61 mittels eines nicht gezeigten motorischen, durch die Pressenantriebssteuerung 58 gesteuerten Stellantriebs verschiebbar.

Figur 4 zeigt eine Schnittdarstellung des Pressenantriebs 7 entlang der in Figur 3 angedeuteten Schnittebene A-A. Ausweislich Figur 4 weist die Schaltscheibe 61 eine zentrale Ausnehmung 62 auf. In der Ausnehmung 62 ist die Torsionsfeder 27 angeordnet. Zwei in die Ausnehmung 62 ragende und radial gegenüberliegende Mitnehmerflügel 63 an der Schaltscheibe 61 sind in axialen Nuten 64 an der Torsionsfeder 27 angeordnet. Die axiale Erstreckung der Nuten 64 entlang der Torsionsfeder 27 ist Figur 3 zu entnehmen. Die Schaltscheibe 61 ist axial verschiebbar aber drehfest mit der Torsionsfeder 27 verbunden.

Außerdem weist die Schaltscheibe 61 zwei weitere am Außenumfang radial gegenüberliegende Mitnehmerflügel 65 auf. Die Mitnehmerflügel 65 sind in axialen Nuten 66 am Innenumfang des Rotors 21 angeordnet, wobei sie nur jeweils an einer Seitenfläche der Nuten 66 anliegen, so dass der Rotor 21 die Schaltscheibe 61 nur im Uhrzeigersinn gemäß Figur 4 mit einem Drehmoment beaufschlagen kann. Demzufolge wird die Schaltscheibe 61 unmittelbar durch den Rotor 21 nur mitgenommen, wenn sich der Rotor 21 gegenüber der Antriebsmutter 34, mit welcher die Schaltscheibe 61 über die Torsionsfederelemente 27, 31 bewegungsverbunden ist, im Uhrzeigersinn gemäß Figur 4 dreht, d .h in Antriebsdrehrichtung 37.

Bei einer so gerichteten Relativdrehung des Rotors 21 und der Antriebsmutter 34 wird nur der Teil der Torsionsfeder 27 verformt, welcher zwischen der Schaltscheibe 61 und dem zweiten Torsionsfederelement 31 verläuft. Bei der in Figur 3 gezeigten axialen Stellung der Schaltscheibe 61 trifft dies für den mit dem Bezugszeichen 67 bezeichneten Teil der Torsionsfeder 27 zu. Der andere Teil der Torsionsfeder 27, der zwischen Läufer 25 und Schaltscheibe 61 verläuft, wird in diesem Fall nicht verformt, da der Läufer 25 und die Schaltscheibe 61, welche beide drehfest mit dem Rotor 21 verbunden sind, immer in derselben Drehstellung zueinander angeordnet sind, sich also zueinander nicht verdrehen.

Bei einer Relativdrehung des Rotors 21 entgegen dem Uhrzeigersinn gemäß Figur 4, beaufschlagt der Rotor 21 die Schaltscheibe 61 aufgrund des einseitigen Spiels zwischen den Seitenflächen der Nuten 66 und den Mitnehmerflügeln 65 der Schaltscheibe 61 nicht. In diesem Fall wird die Torsionsfeder 27 ausschließlich durch den Läufer 25 mitgenommen. Dies hat zur Folge, dass die Torsionsfeder 27 über ihre gesamte Länge hinweg verformt wird.

Da die wirksame Federsteifigkeit der Torsionsfeder 27 umso größer ist, desto kürzer der tatsächlich verformte Teil der Torsionsfeder 27 ist, ergibt sich ein Pressenantrieb 7, bei welchem die Torsionsfeder 27 in einer Torsionsrichtung (im Uhrzeigersinn gemäß Figur 4) eine niedrigere wirksame Federsteifigkeit aufweist als in der entgegensetzten Torsionsrichtung (entgegen dem Uhrzeigersinn gemäß Figur 4). Zudem ist die Federsteifigkeit bei der Torsionsrichtung im Uhrzeigersinn gemäß Figur 4 aufgrund der Verschiebbarkeit der Schaltscheibe 61 entlang der Torsionsfeder 27 einstellbar.

Ergänzend kann es auch vorteilhaft sein, eine zweite verschiebbare Schaltscheibe vorzusehen, welche entsprechend der vorstehend beschriebenen Schaltscheibe 61 ausgebildet ist, mittels deren aber die wirksame Federsteifigkeit der Torsionsfeder 27 in die andere Torsionsrichtung einstellbar ist.

Bei der beschriebenen Variante des Pressenantriebs 7 kann somit die Federsteifigkeit der Torsionsfeder 27, z. B. für die Hubauslösung einerseits und die Hubumkehr andererseits, unterschiedlich eingestellt werden. Zudem kann die Federsteifigkeit aufgrund der Verschiebbarkeit der Schaltscheibe 61, z. B. in Abhängigkeit der Länge der auszuführenden Hubbewegung, variiert werden. Schließlich ist es auch denkbar, dass die Schaltscheibe 61 während einer Hubbewegung entlang des stabförmigen Torsionselementes 27 verschoben wird, so dass die Federsteifigkeit für aufeinanderfolgende Abschnitte ein und derselben Hubbewegung jeweils optimal eingestellt werden kann.

Bei einer weiteren (nicht gezeigten) Variante eines Pressenantriebs handelt es sich um einen Pressenantrieb für eine Exzenterpresse, bei welcher eine Werkzeuglagerung mittels zweier Elektromotoren über einen gemeinsamen Exzenter antreibbar ist. In analoger Weise zu der vorstehenden Verzögerungseinrichtung dient im Falle dieser Variante einer der beiden Elektromotoren als Verzögerungseinrichtung, wobei die Antriebswelle des anderen Elektromotors zu diesem Zweck über eine drehfedernde Kupplung mit dem Exzenter antriebsverbunden ist.

Alternativ kann ein Pressenantrieb auch ein Antriebselement aufweisen, welches mittels zweier Antriebe hin- und her bewegt werden kann. Über ein Umlenkgetriebe wird die Bewegung des Antriebselementes in eine Hubbewegung einer Werkzeuglagerung umgelenkt. Zwischen einem der Antriebe und dem Antriebselement ist ein elastisches Verbindungselement in Form eines Federelementes, zwischengeschaltet. Dieser Antrieb bildet einen Pressenantriebsmotor im vorstehend beschriebenen Sinne. Der zweite Antrieb greift direkt an dem Antriebselement an und bildet einen Verzögerungsmotor im vorstehend beschriebenen Sinne.

Generell können anstelle von Drehantriebsmotoren, auch Linearmotoren, z. B. induktive Linearmotoren, verwendet werden. Dies gilt sowohl für den Pressenantriebsmotor als auch für den Verzögerungsmotor.

## Patentansprüche

1. Pressenantrieb, mittels dessen eine Werkzeuglagerung (47) mit einer Hubbewegung bewegbar ist, wobei der Pressenantrieb (7) wenigstens einen Pressenantriebsmotor (18) umfasst, der über eine mit einem motorseitigen und einem werkzeuglagerungsseitigen Kupplungselement (25, 34) versehene Kupplung mit der Werkzeuglagerung (47) antriebsverbunden ist und wobei zwischen dem motorseitigen Kupplungselement (25) und dem werkzeuglagerungsseltigen Kupplungselement (34) ein als Federelement (27, 31) ausgebildetes elastisches Verbindungselement, um kinetische Energie zu speichern, zwischengeschaltet ist, **dadurch gekennzeichnet, dass** eine steuerbare Verzögerungseinrichtung (51) mit einem Verzögerungsmotor (52) vorgesehen Ist, welcher an dem werkzeuglagerungsseitigen Kupplungselement (34) derart angreift und welcher durch eine numerische Pressenantriebssteuerung (58) derart gesteuert ist, dass er eine durch den Pressenantriebsmotor (18) eingeleitete Bewegungsänderung des werkzeuglagerungsseitigen Kupplungselementes (34) unter Verformung des Federelementes (27, 31) verzögert, wenn das motorseitige Kupplungselement (25) schon eine entsprechende Bewegungsänderung ausgeführt hat.

2. Pressenantrieb nach Anspruch 1, **dadurch gekennzeichnet, dass** die Verzögerungseinrichtung (51) von einer Bremseinrichtung und/oder einer Treibeinrichtung gebildet Ist.

3. Pressenantrieb nach Anspruch 1 oder 2, **dadurch gekennzeichnet, dass** die Verzögerungseinrichtung (51) als Verzögerungsmotor (52) einen Elektromotor, vorzugsweise einen Torquemotor aufweist.

4. Pressenantrieb nach einem der vorhergehenden Ansprüche, **dadurch gekennzeichnet, dass** mittels des Verzögerungsmotors (52) die Werkzeuglagerung (47) zum Erzeugen der Hubbewegung antreibbar ist.

5. Pressenantrieb nach einem der vorhergehenden Ansprüche, **dadurch gekennzeichnet, dass** der Pressenantriebsmotor (18) von einem Elektromotor, Insbesondere einem Torquemotor, gebildet ist.

6. Pressenantrieb nach einem der vorhergehenden Ansprüche, **dadurch gekennzeichnet, dass** das motorseitige Kupplungselement (25) getriebelos mit dem Pressenantriebsmotor (18) verbunden ist und/oder dass das werkzeuglagerungsseitige Kupplungselement (34) getriebelos mit dem Verzögerungsmotor (52) verbunden ist.

7. Pressenantrieb nach einem der vorhergehenden Ansprüche, **dadurch gekennzeichnet, dass** das werkzeuglagerungsseitige Kupplungselement (34) von einer Antriebsmutter gebildet Ist, welche auf einer mit der Werkzeuglagerung (47) antriebsverbundenen Antriebshubspindel (35) aufsitzt.

8. Pressenantrieb nach Anspruch 7, **dadurch gekennzeichnet, dass** das Federelement (27, 31) wenigstens teilweise in einer axialen Aufnahme (38) der Antriebshubspindel (35) angeordnet ist.

9. Pressenantrieb nach einem der vorhergehenden Ansprüche, **dadurch gekennzeichnet, dass** das werkzeuglagerungsseitige Kupplungselement (34) mittels der Verzögerungseinrichtung (51) entgegen einer durch den Pressenantriebsmotor (18) eingeleiteten Bewegungsänderung unbewegt In seiner Lage gehalten werden kann.

10. Pressenantrieb nach einem der vorhergehenden Ansprüche, **dadurch gekennzeichnet, dass** die Werkzeuglagerung (47) mittels des Pressenantriebs (7) mit einer Hubbewegung in einer Hinhubrichtung (13) und mit einer Hubbewegung in einer entgegen gerichteten Rückhubrichtung (14) bewegbar ist.

11. Pressenantrieb nach einem der vorhergehenden Ansprüche, **dadurch gekennzeichnet, dass** das Federelement (27, 31) als wenigstens ein Torsionsfederelement ausgebildet Ist.

12. Pressenantrieb nach einem der vorhergehenden Ansprüche, **dadurch gekennzeichnet, dass** die Federsteifigkeit des Federelementes (27, 31) wenigstens auf die Dynamik des Pressenantriebsmotors (18) abgestimmt ist.

13. Pressenantrieb nach einem der vorhergehenden Ansprüche, **dadurch gekennzeichnet, dass** die Federsteifigkeit des Federelementes (27, 31) einstellbar ist, insbesondere bei einer durch den Pressenantrieb (7) erzeugten Hubbewegung der Werkzeuglagerung (47).

14. Pressenantrieb nach einem der vorhergehenden Ansprüche, **dadurch gekennzeichnet, dass** das Federelement (27, 31) zumindest teilweise als Torsionsfederelement ausgebildet ist und dass sich die Federsteifigkeit des Torsionsfederelements in einer Torsionsrichtung und die Federsteifigkeit des Torsionsfederelements in der entgegengesetzten Torsionsrichtung unterscheiden.

15. Verfahren zum Erzeugen einer Hubbewegung einer Werkzeuglagerung mittels eines Pressenantriebs (7), welcher wenigstens einen Pressenantriebsmotor (18) aufweist, der über eine mit einem motorseitigen und einem werkzeuglagerungsseltigen Kupplungselement (25, 34) versehene Kupplung mit der Werkzeuglagerung (47) antriebsverbunden ist, wobei beim Erzeugen einer Hubbewegung durch den Pressenantriebsmotor (18) eine Bewegungsänderung des werkzeuglagerungsseitigen Kupplungselementes (34) unter Verformung eines zwischen dem werkzeuglagerungsseitigen und dem motorseitigen Kupplungselement (34, 25) zwischengeschalteten und als Federelement (27, 31) ausgebildeten elastischen Verbindungselementes eingeleitet wird, **dadurch gekennzeichnet, dass** ein Verzögerungsmotor (52) einer steuerbaren Verzögerungseinrichtung (51) an dem werkzeuglagerungsseitigen Kupplungselement (34) derart angreift und durch eine numerische Pressenantriebssteuerung (58) derart gesteuert wird, dass die Bewegungsänderung des werkzeuglagerungsseitigen Kupplungselementes (34) unter Verformung des Federelementes (27, 31) verzögert wird, wenn das motorseitige Kupplungselement (25) schon eine entsprechende Bewegungsänderung ausgeführt hat.

## Claims

1. Press drive by means of which a tool mount (47) is movable with a stroke movement, wherein the press drive (7) comprises at least one press drive motor (18) which is connected in terms of driving to the tool mount (47) *via* a coupling provided with a motor-side and a tool-mount-side coupling element (25, 34), and wherein there is interposed between the motor-side coupling element (25) and the tool-mount-side coupling element (34) a resilient connecting element in the form of a spring element (27, 31) for storing kinetic energy, **characterised in that** a controllable delay device (51) is provided with a delay motor (52) which engages the tool-mount-side coupling element (34) in such a manner and which is controlled by a numerical press drive control system (58) in such a manner that it delays a movement change, initiated by the press drive motor (18), of the tool-mount-side coupling element (34) with deformation of the spring element (27, 31) when the motor-side coupling element (25) has already executed a corresponding movement change.

2. Press drive according to claim 1, **characterised in that** the delay device (51) is formed by a braking device and/or a driving device.

3. Press drive according to claim 1 or 2, **characterised in that** the delay device (51) has an electric motor, preferably a torque motor, as the delay motor (52).

4. Press drive according to any one of the preceding claims, **characterised in that** the tool mount (47) can be driven by means of the delay motor (52) to generate the stroke movement.

5. Press drive according to any one of the preceding claims, **characterised in that** the press drive motor (18) is formed by an electric motor, in particular a torque motor.

6. Press drive according to any one of the preceding claims, **characterised in that** the motor-side coupling element (25) is connected in a gearless manner to the press drive motor (18), and/or **in that** the tool-mount-side coupling element (34) is connected in a gearless manner to the delay motor (52).

7. Press drive according to any one of the preceding claims, **characterised in that** the tool-mount-side coupling element (34) is formed by a drive nut which is seated on a drive lifting spindle (35) which is connected in terms of driving to the tool mount (47).

8. Press drive according to claim 7, **characterised in that** the spring element (27, 31) is arranged at least partially in an axial recess (38) of the drive lifting spindle (35).

9. Press drive according to any one of the preceding claims, **characterised in that** the tool-mount-side coupling element (34) can be held stationary in its position, against a movement change initiated by the press drive motor (18), by means of the delay device (51).

10. Press drive according to any one of the preceding claims, **characterised in that** the tool mount (47) is movable by means of the press drive (7) with a stroke movement in an outward stroke direction (13) and with a stroke movement in an oppositely directed return stroke direction (14).

11. Press drive according to any one of the preceding claims, **characterised in that** the spring element (27, 31) is in the form of at least one torsion spring element.

12. Press drive according to any one of the preceding claims, **characterised in that** the spring stiffness of the spring element (27, 31) is at least matched to the dynamics of the press drive motor (18).

13. Press drive according to any one of the preceding claims, **characterised in that** the spring stiffness of the spring element (27, 31) is adjustable, in particular in the case of a stroke movement of the tool mount (47) generated by the press drive (7).

14. Press drive according to any one of the preceding claims, **characterised in that** the spring element (27, 31) is at least partially in the form of a torsion spring element, and **in that** the spring stiffness of the torsion spring element in one torsion direction and the spring stiffness of the torsion spring element in the opposite torsion direction are different.

15. Method of generating a stroke movement of a tool mount by means of a press drive (7) which has at least one press drive motor (18) which is connected in terms of driving to the tool mount (47) *via* a coupling provided with a motor-side and a tool-mount-side coupling element (25, 34), wherein, upon generation of a stroke movement by the press drive motor (18), a movement change of the tool-mount-side coupling element (34) is initiated with deformation of a resilient connecting element which is interposed between the tool-mount-side and the motor-side coupling element (34, 25) and is in the form of a spring element (27, 31), **characterised in that** a delay motor (52) of a controllable delay device (51) engages the tool-mount-side coupling element (34) in such a manner and is controlled by a numerical press drive control system (58) in such a manner that the movement change of the tool-mount-side coupling element (34) is delayed with deformation of the spring element (27, 31) when the motor-side coupling element (25) has already executed a corresponding movement change.

## Revendications

1. Entraînement de presse, au moyen duquel un support d'outil (47) peut être déplacé en une course, sachant que l'entraînement de presse (7) comprend au moins un moteur d'entraînement de presse (18) qui est relié en entraînement au support d'outil (47) par l'intermédiaire d'un accouplement pourvu d'un élément d'accouplement (25) du côté du moteur et d'un élément d'accouplement (34) du côté du support d'outil, et sachant qu'un élément de liaison élastique réalisé sous forme d'élément formant ressort (27, 31) est interposé entre l'élément d'accouplement (25) côté moteur et l'élément d'accouplement (34) côté support d'outil afin d'accumuler de l'énergie cinétique, **caractérisé en ce qu'**il est prévu un dispositif de retardement commandable (51) pourvu d'un moteur de retardement (52) qui agit sur l'élément d'accouplement (34) côté support d'outil de telle sorte, et qui est commandé par une commande numérique (58) d'entraînement de presse de telle sorte, qu'il retarde une variation, déclenchée par le moteur d'entraînement de presse (18), du mouvement de l'élément d'accouplement (34) côté support d'outil avec déformation de l'élément formant ressort (27, 31) si l'élément d'accouplement (25) côté moteur a déjà effectué une variation de mouvement correspondante.

2. Entraînement de presse selon la revendication 1, **caractérisé en ce que** le dispositif de retardement (51) est formé par un dispositif de freinage et/ou par un dispositif entraîneur.

3. Entraînement de presse selon la revendication 1 ou 2, **caractérisé en ce que** le dispositif de retardement (51) présente comme moteur de retardement (52) un moteur électrique, de préférence un moteur-couple.

4. Entraînement de presse selon l'une des revendications précédentes, **caractérisé en ce que** le moteur de retardement (52) permet d'entraîner le support d'outil (47) pour produire la course.

5. Entraînement de presse selon l'une des revendications précédentes, **caractérisé en ce que** le moteur d'entraînement de presse (18) est formé par un moteur électrique, en particulier un moteur-couple.

6. Entraînement de presse selon l'une des revendications précédentes, **caractérisé en ce que** l'élément d'accouplement (25) côté moteur est relié en entraînement direct au moteur d'entraînement de presse (18), et/ou **en ce que** l'élément d'accouplement (34) côté support d'outil est relié en entraînement direct au moteur de retardement (52).

7. Entraînement de presse selon l'une des revendications précédentes, **caractérisé en ce que** l'élément d'accouplement (34) côté support d'outil est formé par un écrou d'entraînement qui est monté sur une broche d'entraînement de course (35) reliée en entraînement au support d'outil (47).

8. Entraînement de presse selon la revendication 7, **caractérisé en ce que** l'élément formant ressort (27, 31) est disposé au moins partiellement dans un logement axial (38) de la broche d'entraînement de course (35).

9. Entraînement de presse selon l'une des revendications précédentes, **caractérisé en ce que** l'élément d'accouplement (34) côté support d'outil peut, au moyen du dispositif de retardement (51), être maintenu immobile dans sa position à l'encontre d'une variation de mouvement déclenchée par le moteur d'entraînement de presse (18).

10. Entraînement de presse selon l'une des revendications précédentes, **caractérisé en ce que** le support d'outil (47) peut, au moyen de l'entraînement de presse (7), être déplacé en une course dans une direction de course aller (13), et en une course dans une direction de course de retour (14) dirigée en sens contraire.

11. Entraînement de presse selon l'une des revendications précédentes, **caractérisé en ce que** l'élément formant ressort (27, 31) est réalisé sous la forme d'au moins un élément formant ressort de torsion.

12. Entraînement de presse selon l'une des revendications précédentes, **caractérisé en ce que** la dureté de ressort de l'élément formant ressort (27, 31) est au moins adaptée à la dynamique du moteur d'entraînement de presse (18).

13. Entraînement de presse selon l'une des revendications précédentes, **caractérisé en ce que** la dureté de ressort de l'élément formant ressort (27, 31) est réglable, en particulier lors d'une course du support d'outil (47) produit par l'entraînement de presse (7).

14. Entraînement de presse selon l'une des revendications précédentes, **caractérisé en ce que** l'élément formant ressort (27, 31) est réalisé au moins partiellement sou forme d'élément formant ressort de torsion, et **en ce que** la dureté de ressort de l'élément formant ressort de torsion dans une direction de torsion et la dureté de ressort de l'élément formant ressort de torsion dans la direction de torsion opposée sont différentes.

15. Procédé pour produire une course d'un support d'outil au moyen d'un entraînement de presse (7), qui présente au moins un moteur d'entraînement de presse (18) qui est relié en entraînement au support d'outil (47) par l'intermédiaire d'un accouplement pourvu d'un élément d'accouplement (25) du côté du moteur et d'un élément d'accouplement (34) du côté du support d'outil, sachant que, lors de la production d'une course par le moteur d'entraînement de presse (18), on déclenche une variation du mouvement de l'élément d'accouplement (34) côté support d'outil avec déformation d'un élément de liaison élastique interposé entre l'élément d'accouplement (25) côté moteur et l'élément d'accouplement (34) côté support d'outil et réalisé sous forme d'élément formant ressort (27, 31), **caractérisé en ce qu'**un moteur de retardement (52) d'un dispositif de retardement commandable (51) agit sur l'élément d'accouplement (34) côté support d'outil de telle sorte, et est commandé par une commande numérique (58) d'entraînement de presse de telle sorte, que la variation du mouvement de l'élément d'accouplement (34) côté support d'outil est retardée avec déformation de l'élément formant ressort (27, 31) si l'élément d'accouplement (25) côté moteur a déjà effectué une variation de mouvement correspondante.
